# EUROPÄISCHE PATENTSCHRIFT

(11) **EP 2 548 241 B1**
(45) Veröffentlichungstag und Bekanntmachung des Hinweises auf die Patenterteilung: **08.04.2015**
(21) Anmeldenummer: 11705821.4
(22) Anmeldetag: 24.02.2011
(51) Int. Cl.: H01M 2/16, H01M 10/42, H01M 10/0525, H01M 4/36, H01M 10/04, H01M 2/02, H01M 2/18, H01M 4/485, H01M 4/505, H01M 4/525, H01M 4/587, H01M 4/70, H01M 4/58, H01M 10/613, H01M 10/625, H01M 10/651, H01M 10/6553, H01M 4/02

(54) **LITHIUMIONENZELLE MIT INTRINSISCHEM SCHUTZ GEGEN THERMISCHES DURCHGEHEN**
LITHIUM ION CELL HAVING INSTRINSIC PROTECTION AGAINST THERMAL RUNAWAY
CELLULE LITHIUM-ION DOTÉE D'UNE PROTECTION INTRINSÈQUE CONTRE TOUT EMBALLEMENT THERMIQUE

(30) Priorität: 15.03.2010 DE 102010011414
(43) Veröffentlichungstag der Anmeldung: 23.01.2013
(73) Patentinhaber: Li-Tec Battery GmbH, 01917 Kamenz (DE)
(72) Erfinder: SCHAEFER, Tim, 99762 Harztor (DE); THIEMIG, Denny, 01468 Moritzburg (DE); HOHENTHANNER, Claus-Rupert, 63457 Hanau (DE)
(74) Vertreter: Brückner, Ingo Andreas
(86) Internationale Anmeldenummer: PCT/EP2011/000908
(87) Internationale Veröffentlichungsnummer: WO 2011/113520

(56) Entgegenhaltungen:
- WO-A1-2007/028662
- WO-A2-2009/128879
- CZ-B6- 301 387
- JP-A- 2005 322 517
- US-A1- 2004 041 537
- US-A1- 2005 031 942
- US-A1- 2006 228 629
- US-A1- 2008 138 700
- US-A1- 2008 138 702
- US-B2- 7 267 904

## Beschreibung

Die vorliegende Erfindung betrifft eine elektrochemische Zelle für eine Lithiumionenbatterie umfassend die in Anspruch 1 genannten Merkmale.

Aus dem Stand der Technik sind Zellen für Lithiumionenbatterien bekannt, welche typischerweise eine zylinderförmige oder prismatische Umhüllung/Einhausung aufweisen, siehe beispielsweise den zylindrischen Batterietyp 18650 (wobei 18 der Durchmesser und 650 die Länge in mm sind). Auf den S. 187 bis 188 der wissenschaftlichen Artikelsammlung *"*Lithium Ion Batteries" (Hg.: M. Yoshio et al., Springer 2009, 1. Auflage) wird eine solche zylinderförmige Zelle beschrieben. Entscheidend sind neben dem Zellwickel der Hohlraum mit einem Dorn ("*center pin*") sowie ein Berstschutz ("*rupture vent*"). Wie im 3. Absatz auf S. 186 beschreiben ist, wird ein im Inneren der Zelle möglicherweise aufgebauter Überdruck über die Entlüftung ("*vent*") und den inneren Hohlraum abgebaut. Solche mechanischen Einrichtungen werden für Lithiumionen-zellen und -batterien allgemein als notwendig angesehen, falls bei Missbrauch der Zelle/Batterie, insbesondere Überladen und/oder Tiefenentladung, aber auch bei unsachgemäßer mechanischer Beanspruchung der Zelle/Batterie gegebenenfalls (elektro)chemische Prozesse unter Wärmeentwicklung und/oder Gasentwicklung ablaufen, welche zu einem erhöhten Gasdruck in der Zelle führen. Eine analog aufgebaute prismatische Zelle ist auf S. 189 des besagten Artikels beschrieben.

Sicherheitsventile in der Umhüllung sind beispielhaft in US 5 853 912 oder in US 2006/0263676 beschrieben. Bersteinrichtungen, Druckventile, Sollbruchstellen und dergleichen sind gemäß dem Stand der Technik seitlich in der Umhüllung und/oder im Deckel der Zelle angebracht. Das Dokument WO 2009 12 88 79 A2 offenbart eine weitere Zelle gemäß des Standes der Technik.

Im Lichte des bekannten Standes der Technik ist es eine Aufgabe der vorliegenden Erfindung, eine Lithiumionenzelle für eine Lithiumionenbatterie bereitzustellen, welche keine Sicherheitsventile, Berstscheiben, Sollbruchstellen oder dergleichen benötigt, und trotzdem die Sicherheit der Zelle/Batterie auch im Missbrauchsfalle (Überladung, Tiefenentladung, mechanische Belastung, thermischer Durchbruch oder dergleichen) gewährleistet.

Diese (und andere) Aufgabe wird/werden dadurch gelöst, dass die elektrochemische Zelle mit den in Anspruch 1 genannten Merkmalen bereitgestellt wird.

Im Sinne der vorliegenden Erfindung ist eine *"druckfeste"* Umhausung jede denkbare Umhüllung, Hüllbleche mit Rahmen, Rahmenstruktur, abgedichtete Struktur umfassend tiefgezogene Schalenteile etc., welche die im Inneren der Zelle (und damit im Inneren der Umhausung befindlichen) aktiven Komponenten der Lithiumionenzelle, also insbesondere Kathode, Anode, Separator und Elektrolyt vor stofflichen, insbesondere chemischen, Einwirkungen und Wechselwirkungen schützt, und zwar dauerhaft über die gesamte vorgesehene Lebensdauer der Zelle, sowie unter Drucken, welche um das anderthalbfache, insbesondere das zweifache, bevorzugt das Vierfache gegenüber dem Umgebungsdruck herabgesetzt oder erhöht sind. Diese Drucke können sowohl innerhalb als auch außerhalb der Umhausung herrschen.

Entsprechend bedeutet *"gasdicht",* dass die Umhausung auch bei den im letzten Absatz genannten Unter- beziehungsweise Überdrucken ihre Funktion, die aktiven Komponenten der Lithiumionenzelle, also insbesondere Kathode, Anode, Separator und Elektrolyt vor stofflichen, insbesondere chemischen Einwirkungen und Wechselwirkungen zu schützen, nicht verliert, und zwar dauerhaft über die gesamte vorgesehene Lebensdauer der Zelle

Wie bereits oben erwähnt ist eine solche Umhausung vorteilhaft in Form einer Verbundfolie (Laminatfolie) ausgebildet ("pouch cell", "coffee bag"), oder als Rahmenzelle mit Rahmen und Hüllblechen oder als abgedichteter Verbund von Schalenstücken, oder als jede beliebige Kombination oder Abwandlung hiervon.

In einer bevorzugten Ausführungsform umfasst die kathodische Elektrode zumindest einen Träger, auf welchem zumindest ein Aktivmaterial aufgebracht oder abgeschieden ist, wobei das Aktivmaterial entweder:
(1) zumindest eine Lithium-Polyanion-Verbindung oder
(2) zumindest eine Lithium-Nickel-Mangan-Kobalt-Mischoxid (NMC), welches nicht in einer Spinellstruktur vorliegt, vorzugsweise Li[Co_{1/3}Mn_{1/3}Ni_{1/3}]O₂, wobei der Anteil an Li, Co, Mn, Ni und O jeweils um +/- 5 % variieren kann, oder
(3) eine Mischung aus einem Lithium-Nickel-Mangan-Kobalt-Mischoxid (NMC), welches nicht in einer Spinellstruktur vorliegt, mit einem Lithium-Mangan-Oxid (LMO) in Spinellstruktur, oder
(4) eine Mischung aus (1) und (2) oder eine Mischung aus (1) und (3)
umfasst.

Im Hinblick auf das Lithium-Nickel-Mangan-Kobalt-Mischoxid (NMC) ist eine geringfügig "überlithiierte" Stöchiometrie mit Li₁₊ₓ[Co_{1/3}Mn_{1/3}Ni_{1/3}]O₂ mit x im Bereich von 0.01 bis 0.10 besonders bevorzugt, da durch eine solche "Überlithiierung" gegenüber der 1:1 Stöchiometrie bessere Zykleneigenschaften erreicht werden.

Dabei ist es besonders bevorzugt, dass der Träger für die kathodische Elektrode ein metallisches Material umfasst, insbesondere Aluminium, und dass besagter Träger eine Dicke von 5 µm bis 100 µm, vorzugsweise 10 µm bis 75 µm, weiter vorzugsweise 15 µm bis 45 µm aufweist. Vorzugsweise ist der Träger als eine Kollektorfolie ausgebildet.

In einer bevorzugten Ausführungsform umfasst die anodische Elektrode zumindest einen Träger, auf welchem zumindest ein kohlenstoffhaltiges Aktivmaterial aufgebracht oder abgeschieden ist.

Dabei ist es besonders bevorzugt, dass der Träger für die anodische Elektrode ein metallisches Material umfasst, insbesondere Kupfer, und dass besagter Träger eine Dicke von 5 µm bis 100 µm, vorzugsweise 10 µm bis 75 µm, weiter vorzugsweise 15 µm bis 45 µm aufweist. Vorzugsweise ist der Träger als eine Kollektorfolie ausgebildet.

Gemäß einer weiteren Ausführungsform umfasst die Anode reines metallisches Lithium. Hierbei entfällt das beschriebene Trägermaterial für die Anode. Das metallische Lithium wird bevorzugt als Dünnband, Folie, Streckmetall oder Schwamm eingesetzt.

Im Sinne der vorliegenden Erfindung liegen nicht nur die Träger in einer geringen Dicke vor sondern auch die darauf aufbrachten Aktivmaterialien. Die Dicke der kathodischen Elektrode (Träger und Aktivmaterial) sowie die Dicke der anodischen Elektrode (Träger und Aktivmaterial) ist dabei jeweils geringer als 300 µm, vorzugsweise geringer als 200 µm, weiter vorzugsweise geringer als 150 µm sowie weiter vorzugsweise geringer als 100, und schließlich geringer als 50 µm.

Die geringe Dicke der Träger sowie der Elektroden insgesamt erlaubt eine besonders effektive Kühlung der Aktivmaterialien. Auch dies trägt dazu bei, dass selbst und gerade bei Missbrauch der Zelle (thermisch, mechanisch oder elektrisch/ladetechnisch) die Wärmeentwicklung unter Kontrolle bleibt, weil insgesamt keine ausgedehnten Bereiche mit Aktivmaterialien vorliegen und eine Wärmeableitung über die Träger stets möglich bleibt. Dies gilt insbesondere auch im Zusammenhang mit den erfindungsgemäßen Separatoren umfassend poröse keramische Materialien, da besagte Materialien nicht an den beim Missbrauch der Zelle gegebenenfalls ablaufenden chemischen Reaktionen teilnehmen beziehungsweise Reaktanden für diese zur Verfügung stellen. Ein weiterer Vorteil dieser Geometrie ist die insgesamt verringerte Impedanz (Innenwiderstand) der Zelle, welche gleichfalls die Temperaturentwicklung der Zelle im Inneren begrenzt.

Dabei ist es weiterhin bevorzugt, dass die Elektroden und die Separatoren - vorzugsweise jeweils mindestens 20 hiervon - als vereinzelte Blätter, Folienband oder Bahnen in der geringen Schichtdicke vorliegen und alternierend in der Sequenz [...] - kathodische Elektrode - Separator - anodische Elektrode - Separator - kathodische Elektrode - [...] gelegt und/oder zusammenlaminiert sind.

Im Falle einer Z-Wicklung soll erfindungsgemäß nicht laminiert werden.

Durch diese alternierende Anordnung von Bahnen oder Lagen ist insbesondere eine besonders effektive Wärmeabfuhr über die Vielzahl der getrennt voneinander vorliegenden Vielzahl von Trägern der Elektroden gegeben. Eine solche Wärmeabfuhr ist in zylindrisch gewickelten "Bahnen" von Elektroden nicht in gleichem Umfang möglich.

Der erfindungsgemäße Separator umfassend das poröse keramische Material weist eine für die Funktion der elektrochemische Zelle ausreichende Porosität auf, ist jedoch im Vergleich zu konventionellen Separatoren, die keinen keramischen Werkstoff umfassen, wesentlich temperaturbeständiger und schrumpft bei höheren Temperaturen weniger. Ein keramischer Separator weist zudem vorteilhaft eine hohe mechanische Festigkeit auf. Beides ist für die der vorliegenden Erfindung zugrundeliegenden Aufgabe des "intrinsischen" Schutzes der Zelle vor thermischem "Durchgehen" vorteilhaft.

Durch die vorliegende Kombination "hermetisches Containment" in der erfindungsgemäßen Umhausung/Umhüllung mit besonders dünnen Elektroden und den zwischen den Elektroden angebrachten keramischen Separatoren wird erreicht, dass auch im Missbrauchsfalle (Überladung, Tiefenentladung, mechanische Belastung, thermischer Durchbruch oder dergleichen) im Inneren der Umhausung/Umhüllung kein oder nur ein geringfügiger Gasdruck aufgebaut wird, welcher jedenfalls das Vorhandensein eines Überdruckventils oder eines Berstschutzes oder dergleichen nicht notwendig macht. Damit ist die vorliegende Zelle nicht nur betriebssicher, sondern auch baulich einfacher als die Zellen aus dem Stand der Technik.

Gemäß einer bevorzugten Ausführungsform enthält das mit dem Elektrolyten in Kontakt tretende Aktivmaterial von Kathode und/oder Anode (sowie gegebenenfalls auch der Elektrolyt selber), das poröse keramische Material des Separators in Form von dem Aktivmaterial (oder gegebenenfalls auch dem Elektrolyten selber) zugesetzten Partikeln (siehe dazu auch unten die detaillierte Beschreibung des Aufbringens der Aktivmaterialien auf den Träger).

In einer bevorzugten Ausführungsform hierzu umfasst das mit dem Elektrolyten in Kontakt tretende Aktivmaterial von Anode und/oder Kathode einem Anteil von 0,01 bis 5 Gewichtsprozent (bezogen auf das Gesamtgewicht an Aktivmaterial), vorzugsweise 0.05 bis 3 Gewichtsprozent, weiter bevorzugt 0,1 bis 2 Gewichtsprozent an partikelförmigem porösem keramischem Werkstoff, welcher im wesentlichen dem porösen keramischen Werkstoff des Separators entspricht.

In einer bevorzugten Ausführungsform ist zumindest 50% des in der elektrochemischen Zelle frei vorliegenden Elektrolyten vom porösen keramischen Material des Separators aufgenommen, vorzugsweise zumindest 70%, weiter vorzugsweise zumindest 90%, weiter vorzugsweise zumindest 95%.

Diese Zugabe von porösem keramischen Material zum Elektrolyten beziehungsweise vorzugsweise zum mit dem Elektrolyten in Kontakt tretenden Aktivmaterial ist insbesondere deshalb bevorzugt, da hierdurch der Elektrolyt solchermaßen gebunden wird, dass er bei Missbrauch der Zelle nicht an den dann gegebenenfalls ablaufenden unerwünschten Reaktionen teilnimmt (oder zumindest nicht in einem solchen Umfang teilnimmt, dass ein "Durchgehen" oder "Durchbrennen" der gesamten Zelle möglich ist).

Wie an den oben genannten technischen Merkmalen zu erkennen ist, wird der Schutz gegen Überdruck in der Zelle also nicht über eine Abwehrreaktion nach Schadenseintritt durch Abbau eines Überdrucks erreicht, sondern ist vielmehr intrinsisch schon im Gesamtdesign der Zelle durch gezielte Materialauswahl und geometrische Anordnung in der Zelle angelegt.

Insbesondere durch den Einsatz eines keramischen Separators in der beanspruchten Geometrie, sowie durch die bevorzugte Ausführungsform, in welcher auch poröse keramische Partikel entsprechend dem Separatormaterial im Elektrolyten eingesetzt werden bzw. diesen aufnehmen, wird verhindert beziehungsweise weitgehend vermieden, dass die Zelle bei Missbrauch "durchgeht", also chemische Reaktionen und/oder Wärmeentwicklung in einem nicht mehr kontrollierbaren Maße ablaufen. Dies liegt darin begründet, dass der keramische poröse Separator sowie insbesondere der darin aufgenommene Elektrolyt (fast der gesamte Elektrolyt ist im Separator selber und/oder im - Separatormaterial, welches den Elektroden und/oder dem Elektrolyten (vorzugsweise in Partikelform) zugegeben wird/wurde, aufgenommen) nicht an den schädlichen chemischen Reaktionen teilnehmen kann und somit auch kein Überdruck in einem signifikanten Maße aufgebaut werden kann. Auch wird die Zelle insgesamt so angelegt (geringe Dicke von Elektroden, Träger und Separatoren), dass die mechanische Stabilität dieses speziellen Separators zum Tragen kommt und nicht vom Separator "geschützte" Aktivbereiche minimiert werden.

Die erfindungsgemäße elektrochemische Lithiumionenzelle findet eine bevorzugte Anwendung in Batterien, insbesondere in Batterien mit hoher Energiedichte und/oder hoher Leistungsdichte (sogenannte *"high power batteries"* beziehungsweise *"high energy batteries"*).

Weiter bevorzugt sollen besagte Lithium-Ionen-Zellen und Lithium-Ionen-Batterien in Elektrowerkzeugen und zum Antrieb von Fahrzeugen eingesetzt werden, und zwar sowohl von vollständig oder überwiegend elektrisch angetriebenen Fahrzeugen oder von Fahrzeugen im sogenannten "Hybrid"-Betrieb, also gemeinsam mit einem Verbrennungsmotor. Auch eine Anwendung solcher Batterien gemeinsam mit Brennstoffzellen sowie im stationären Betrieb ist eingeschlossen.

### Detaillierte Beschreibung von bevorzugten Ausführungsformen:

Der Begriff **"kathodische Elektrode"** bezeichnet eine Elektrode, die beim Anschluss an einen Verbraucher ("Entladung"), also beispielsweise beim Betrieb eines Elektromotors, Elektronen aufnimmt. Die kathodische Elektrode ist demzufolge in diesem Fall die "positive Elektrode", in welche die Ionen beim Entladen einlagern.

Ein "Aktivmaterial" von kathodischer oder anodischer Elektrode im Sinne der vorliegenden Erfindung ist ein Material, welches Lithium in ionischer oder metallischer oder jedweder Zwischenform einlagern kann, insbesondere in einer Gitterstruktur einlagern kann ("Interkalation"). Das Aktivmaterial nimmt somit "aktiv" an den beim Laden und Entladen auftretenden elektrochemischen Reaktionen teil (im Gegensatz zu anderen möglichen Bestandteilen der Elektrode wie beispielsweise Bindemittel, Stabilisator oder Träger).

Vorliegend ist die Auswahl des kathodischen Elektrodenmaterials für die jeweils ins Auge gefasste Anwendung von Bedeutung. So sind beispielsweise Aktivmaterialien für Anwendungen in tragbaren elektrischen Geräten (Kommunikationselektronik) bekannt, insbesondere Lithium-Kobalt-Oxide (z.B. LiCoO₂) oder Lithium-(Nickel)-Kobalt-Aluminium-Oxide (NCA). Diese kommerziell bereits erfolgreich eingesetzten Aktivmaterialien sind allerdings aus Kostengründen (Kobalt ist ein vergleichsweise teures Übergangsmetall) nicht notwendigerweise in gleichem Maße für Anwendungen in Elektrofahrzeugen oder Fahrzeugen mit Hybridantrieben geeignet, da hier viel größere Mengen an Aktivmaterial benötigt werden und somit der Preis/die Verfügbarkeit dieser Aktivmaterialien eine größere Rolle spielt. Auch im Hinblick auf hohe Leistungen sind manchen dieser konventionellen Materialien Grenzen gesetzt.

Ein Aktivmaterial für kathodisch im Sinne der vorliegenden Erfindung vorteilhafte Elektroden, welches für elektrochemische Zellen und Batterien eingesetzt werden kann, sind **Lithium-Mischoxide mit Nickel, Mangan und Kobalt (Lithium-Nickel-Mangan-Kobalt-Mischoxide, "NMC").** Lithium-Nickel-Mangan-Kobalt-Mischoxide sind aus Sicherheits- und aus Kostengründen gegenüber Lithium-Kobalt-Oxiden vorzuziehen und sind im Sinne der vorliegenden Erfindung bevorzugt.

Mischoxide umfassend Kobalt, Mangan und Nickel ("NMC"), insbesondere einphasige Lithium-Nickel-Mangan-Kobalt-Mischoxide, sind als mögliche Aktivmaterialien für elektrochemische Zellen sind im Stand der Technik prinzipiell bekannt (siehe beispielsweise WO 2005/056480 sowie den hierzu grundlegenden wissenschaftlichen Artikel von Ohzuku aus dem Jahre 2001 [T. Ohzuku et al., Chem. Letters 30 2001, Seiten 642 bis 643]).

Prinzipiell bestehen vorliegend bezüglich der Zusammensetzung (Stöchiometrie) des Lithium-Nickel-Mangan-Kobalt-Mischoxides keine Einschränkungen, außer dass dieses Oxid neben Lithium zumindest jeweils 5 Mol %, bevorzugt jeweils zumindest 15 Mol %, weiter bevorzugt jeweils zumindest 30 Mol % an Nickel, Mangan und Kobalt enthalten muss, jeweils bezogen auf die Gesamtmolzahl an Übergangsmetall-Anteilen im Lithium-Nickel-Mangan-Kobalt-Mischoxid.

Das Lithium-Nickel-Mangan-Kobalt-Mischoxid kann mit beliebigen anderen Metallen, insbesondere Übergangsmetallen dotiert sein, solange sichergestellt ist, dass die oben genannten molaren Mindestmengen an Ni, Mn und Co vorliegen.

Dabei ist ein Lithium-Nickel-Mangan-Kobalt-Mischoxid der folgenden Stöchiometrie besonders bevorzugt: Li[Co_{1/3}Mn_{1/3}Ni_{1/3}]O₂, wobei der Anteil an Li, Co, Mn, Ni und O jeweils um +/- 5 % variieren kann. Eine geringfügig "überlithiierte" Stöchiometrie mit Li₁₊ₓ[Co_{1/3}Mn_{1/3}Ni_{1/3}]O₂ mit x im Bereich von 0.01 bis 0.10 ist besonders bevorzugt, da durch eine solche "Überlithiierung" gegenüber der 1:1 Stöchiometrie bessere Zykleneigenschaften und eine größere Stabilität der Zelle (siehe erfindungsgemäße Aufgabe) erreicht wird.

Lithium-Nickel-Mangan-Kobalt-Mischoxide liegen im Sinne der vorliegenden Erfindung nicht in einer Spinellstruktur vor. Bevorzugt liegen sie vielmehr in einer Schichtstruktur vor, beispielsweise einer "O3-Struktur". Weiter bevorzugt unterliegen diese Lithium-Nickel-Mangan-Kobalt-Mischoxide der vorliegenden Erfindung auch während des Entlade- und Ladebetriebs keiner nennenswerten (d.h. nicht im Umfang von mehr als 5 %) Phasenumwandlung in eine andere Struktur, insbesondere nicht in eine Spinellstruktur.

Ein alternatives - besonders kostengünstiges - Aktivmaterial für kathodische Elektroden, welches für elektrochemische Zellen und Batterien eingesetzt werden kann, die in Elektrowerkzeugen, elektrisch betriebenen Kraftfahrzeugen oder Fahrzeugen mit Hybridantrieb verwendet werden können, sind **Polyanionverbindungen des Lithiums**.

Die Lithium-Polyanion-Verbindung ist dabei vorzugsweise ausgewählt aus der Gruppe umfassend:

| **Gruppe** | **Untergruppe** | **Beispiele** |
|---|---|---|
| Na-Superionenleiter | M³⁺(X6⁺O₄)₃ | monoklines Fe₂(SO₄)₃, rhomboedrisches Fe₂(SO₄)₃, Fe₂(MoO₄)₃ |
| | LiM³⁺₂(X⁶⁺O₄)₂(X⁵⁺O₄) | LiFe₂(SO₄)₂(PO₄) |
| | LiM³⁺₂(X^{5+O}₄)₃ | monoklines Li₃Fe₂(PO₄)₃, rhomboedrisches Li₃Fe₂(PO₄)₃, monoklines Li₃V₂(PO₄)₃, rhomboedrisches Li₃V₂(PO₄)₃, Li₃Fe₂(AsO₄)₃ |
| | LiM⁴⁺₂(X⁵⁺O₄)₃ | Li₃Ti₂(PO₄)₃ |
| | Li₂M⁴⁺M³⁺(X⁵⁺O₄)₃ | Li₂TiFe(PO₄)₃, Li₂TiCr(PO₄)₃ |
| | Li₂M⁵⁺M³⁺(X⁵⁺O₄)₃ | LiNbFe(PO₄)₃ |
| | M⁵⁺M⁴⁺(X⁵⁺O₄)₃ | NbTi(PO₄)₃ |
| Pyrophosphate | | Fe₄(P₂O₇)₃, LiFeP₂O₇, TiP₂O₇, LiVP₂O₇, MoP₂O₇, Mo₂P₂O₇, |
| Olivine | | LiFePO₄, Li₂FeSiO₄ |
| Amorphes FePO₄ | | FePO₄·nH₂O, FePO₄ |
| MOXO₄ | M⁵⁺OX⁵⁺O₄ | α-MoOPO₄, β-VOPO₄, γ-VOPO₄, 30δ-VOPO₄, ε-VOPO₄, βVOAsO₄ |
| | LiM⁴⁺OX⁵⁺O₄ | α-LiVOPO₄ |
| | M⁴⁺OX⁶⁺O₄ | β-VOSO₄30 |
| | Li₂M⁴+OX⁴+O₄ | Li₂VOSiO₄ |
| Brannerite | LiVMoO₆ | LiVMoO₆ |
| Borate | | Fe₃BO₆, FeBO₃, VBO₃, TiBO₃ |

Dabei ist "X" ein Heteroatom wie P, N, S, B, C oder Si und "XO" ein (Hetero-)Polyanion; "M" ist ein Übergangsmetall-ion. Angrenzende "XO"-Einheiten sind vorzugsweise eckenverbunden.

Verbindungen mit der Formel LiMPO₄ sind dabei besonders bevorzugt, wobei "M" wenigstens ein Übergangsmetallkation der ersten Reihe des Periodensystems der Elemente ist. Das Übergangsmetallkation ist vorzugsweise aus der Gruppe bestehend aus Mn, Fe, Ni oder Ti oder einer Kombination dieser Elemente gewählt. Die Verbindung weist vorzugsweise eine Olivinstruktur auf.

Die genannten polyanionischen Verbindungen sind insbesondere deshalb bevorzugt, da sie sich durch günstige Kosten und gute Verfügbarkeit auszeichnen, insbesondere auch gegenüber solchen Aktivmaterialien, die Kobalt enthalten. Diese Kriterien (Kosten/Verfügbarkeit) mögen für Batterieanwendungen in der Unterhaltungselektronik beziehungsweise Kommunikation (Mobiltelefone, laptops) nicht einschlägig sein, wohl aber für elektrisch betriebene Fahrzeuge mit ihrem ungleich höheren Bedarf an Aktivmaterialien.

In einer Ausführungsform der vorliegenden Erfindung wird zumindest ein Polyanion als wesentliches Aktivmaterial für die kathodische Elektrode eingesetzt, d.h. zumindest 50 %, vorzugsweise zumindest 80 %, weiter vorzugsweise zumindest 90 % des Aktivmaterials der Kathode umfassen das zumindest eine polyanionische Material (jeweils Mol %).

In einer bevorzugten Ausführungsform umfasst das Aktivmaterial der kathodischen Elektrode zumindest eine Lithium-Polyanion-Verbindung gemeinsam mit zumindest (i) einem Lithium-Nickel-Mangan-Kobalt-Mischoxid (NMC), welches *nicht* in einer Spinellstruktur vorliegt, und/oder mit (ii) einem Lithium-Mangan-Oxid (LMO) *in* Spinellstruktur.

Eine Mischung von (i) mit (ii) verbessert die Stabilität der zugehörigen elektrochemischen Zelle während dies gleichzeitig einen dünnerem Auftrag des Aktivmaterials auf dem Substrat erlaubt. Geringe Schichtdicken verringern die Impedanz ("Innenwiderstand") der Zelle, was sich in allen Anwendungen der Zelle positiv niederschlägt, insbesondere aber in "high power" (Hochleistungs-) Anwendungen. Dabei liegen in einer solchen Mischung bevorzugt zumindest 20 Mol %, vorzugsweise zumindest 40 Mol %, weiter bevorzugt zumindest 60 Mol % an Aktivmaterial in Form von zumindest einem Polyanion vor. Bezüglich der Verhältnisse von Lithium Nickel-Mangan-Kobalt Mischoxid zu Lithium Mangan Oxide gelten die unten angegebenen bevorzugten Bereiche.

Gemäß einer anderen Ausführungsform umfasst das Aktivmaterial für die kathodische Elektrode zumindest eine **Mischung aus einem Lithium-Nickel-Mangan-Kobalt-Mischoxid (NMC), welches nicht in einer Spinellstruktur vorliegt, mit einem Lithium-Mangan-Oxid (LMO) in Spinellstruktur**. Dabei ist diese Mischung bevorzugt das wesentliche Aktivmaterial für die kathodische Elektrode, d.h. zumindest 80 %, vorzugsweise zumindest 90 % des Aktivmaterials der Kathode umfassen die zumindest eine Mischung aus einem Lithium-Nickel-Mangan-Kobalt-Mischoxid (NMC), welches nicht in einer Spinellstruktur vorliegt, mit einem Lithium-Mangan-Oxid (LMO) in Spinellstruktur.

Bevorzugt für alle Ausführungsformen, in welchen eine solche Lithium Nickel-Mangan-Kobalt Mischoxid/Lithium Mangan Oxide Mischung vorliegt (also alleine oder zusammen mit polyanionischen Verbindungen) ist es bevorzugt, dass das Aktivmaterial zumindest 30 Mol %, vorzugsweise zumindest 50 Mol % NMC umfasst, sowie zugleich zumindest 10 Mol %, vorzugsweise zumindest 30 Mol % LMO, jeweils bezogen auf die Gesamtmolzahl des Aktivmaterials der kathodischen Elektrode (also nicht bezogen auf die kathodische Elektrode insgesamt, welche zusätzlich zum Aktivmaterial noch Leitfähigkeitszusätze, Bindemittel, Stabilisatoren etc. umfassen kann).

Besonders bevorzugt ist es, dass der Anteil des Lithium-Mangan-Oxids im Aktivmaterial 5 bis 25 Mol % ist.

Bevorzugt ist es, dass NMC und LMO *zusammen* zumindest 60 Mol % des Aktivmaterials ausmachen, weiter bevorzugt zumindest 70 Mol %, weiter bevorzugt zumindest 80 Mol %, weiter bevorzugt zumindest 90 Mol %, jeweils bezogen auf die Gesamtmolzahl des Aktivmaterials der kathodischen Elektrode (also nicht bezogen auf die kathodische Elektrode insgesamt, welche zusätzlich zum Aktivmaterial noch Leitfähigkeitszusätze, Bindemittel, Stabilisatoren etc. umfassen kann).

Für alle vorstehend genannten Ausführungsformen betreffend das Aktivmaterial (also NMC, Polyanionen/Polyanionen plus NMC mit Lithium-Mangan-Oxid / NMC mit Lithium-Mangan-Oxid alleine), ist es bevorzugt, dass das auf dem Träger aufgebrachte Material im Wesentlichen Aktivmaterial ist, d.h. dass 80 bis 95 Gewichtsprozent des auf dem Träger der kathodischen Elektrode aufgebrachten Materials das besagte Aktivmaterial ist, weiter bevorzugt 86 bis 93 Gewichtsprozent, jeweils bezogen auf das Gesamtgewicht des Materials (also bezogen auf die kathodische Elektrode ohne Träger insgesamt, welche zusätzlich zum Aktivmaterial noch Leitfähigkeitszusätze, Bindemittel, Stabilisatoren etc. umfassen kann).

In Bezug auf das Verhältnis in Gewichtsanteilen von NMC als Aktivmaterial zu LMO als Aktivmaterial ist es bevorzugt, dass dieses Verhältnis von 9 (NMC) : 1 (LMO) bis zu 3 (NMC) : 7 (LMO) reicht, wobei 7 (NMC) : 3 (LMO) bis zu 3 (NMC): 7 (LMO) bevorzugt ist und wobei 6 (NMC): 4 (LMO) bis zu 4 (NMC) : 6 (LMO) weiter bevorzugt ist.

Eine Mischung von Lithium-Nickel-Mangan-Kobalt-Mischoxid (NMC) mit zumindest einem Lithium-Mangan-Oxid (LMO) führt zu einer erhöhten Stabilität, insbesondere verbesserten Lebensdauer der kathodischen Elektrode. Ohne diesbezüglich an eine Theorie gebunden zu sein, wird vermutet, dass diese Verbesserungen auf den erhöhten Mangan-Anteil gegenüber reinem NMC zurückzuführen ist. Dabei werden in der Mischung die hohe Energiedichte und die weiteren Vorteile des Lithium-Nickel-Mangan-Kobalt-Mischoxids (NMC) gegenüber Lithium-Mangan-Oxiden (LMO) weitestgehend beibehalten. So wurde in Versuchen gezeigt, dass die oben genannten Mischungen von Lithium-Nickel-Mangan-Kobalt-Mischoxiden mit Lithium-Mangan-Oxid (mit oder ohne Beimengung des bevorzugten weiteren Bestandteils der zumindest einen Lithium-Polyanion-Verbindung) so gut wie keinen Kapazitätsverlust nach 250 Lade- und Entladezyklen oder im Temperaturalterungstest zeigen. Die 80 %-Kapazitätsgrenze bezogen auf die ursprüngliche Kapazität wird erst nach 25.000 Vollzyklen erreicht.

Im Temperaturalterungstest und bei voller Beladung wurde für die erfindungsgemäß bevorzugten Mischungen eine gegenüber "reinem" NMC überdurchschnittlich große Haltbarkeit erreicht, die auf eine Lebensdauer von über 12 Jahren hindeutet. Dabei wurde auch die Temperaturstabilität der Zelle insgesamt verbessert.

Eine Kombination dieser Materialien mit den oben genannten Anteilen an Polyanion-Aktivmaterialien ist besonders bevorzugt, da hierdurch auch die Kosten minimiert werden, ohne bezüglich der Performance der Batterie signifikante Einschränkungen machen zu müssen.

**Lithium-Mangan-Oxide** ("LMO") liegen üblicherweise in einer Spinellstruktur vor. Lithium-Mangan-Oxide in Spinellstruktur und im Sinne der vorliegenden Erfindung umfassen als Übergangsmetall zumindest 50 Mol %, vorzugsweise zumindest 70 Mol %, weiter vorzugsweise zumindest 90 Mol % an Mangan, jeweils bezogen auf die Gesamtmolzahl an im Oxid insgesamt vorliegenden Übergangsmetallen. Eine bevorzugte Stöchiometrie des Lithium-Mangan-Oxids ist Li₁₊ₓMn_{2-y}M_{y}O₄ wobei M zumindest ein Metall, insbesondere zumindest ein Übergangsmetall ist, und -0,5 (bevorzugt -0,1) ≤ x ≤ 0,5 (bevorzugt 0.2), 0 ≤ y ≤ 0,5.

Die vorliegend geforderte **"Spinell-Struktur"** ist dem Fachmann als eine weit verbreitete, nach ihrem Hauptvertreter, dem Mineral "Spinell" (Magnesiumaluminat, MgAl₂O₄), benannte Kristallstruktur für Verbindungen des Typs AB₂X₄ wohlbekannt. Die Struktur besteht aus einer kubisch dichtesten Kugelpackung der Chalkogenid (hier Sauerstoff)-Ionen deren Tetraeder- und Okatederlücken (teilweise) durch die Metallionen besetzt sind. Spinelle als Kathodenmaterialien für Lithium-Ionen-Zellen sind beispielhaft in Kapitel 12 von "Lithium Batteries", herausgegeben von Nazri/Pistoia (ISBN: 978-1-4020-7628-2), beschrieben.

Reines Lithium-Mangan-Oxid kann beispielhaft die Stöchiometrie LiMn₂O₄ aufweisen. Die im Rahmen der vorliegenden Erfindung verwendeten Lithium-Mangan-Oxide sind allerdings vorzugsweise **modifiziert und/oder stabilisiert**, da reines LiMn₂O₄ den Nachteil hat, dass Mn-Ionen unter bestimmten Umständen aus der Spinellstruktur gelöst werden. Prinzipiell bestehen keinerlei Einschränkungen, wie diese Stabilisierung der Lithium-Mangan-Oxide bewirkt werden kann, solange das Lithium-Mangan-Oxid unter den Betriebsbedingungen einer Li-Ionen-Zelle über die gewünschte Lebensdauer stabil gehalten werden kann. Bezüglich bekannter Stabilisierungsmethoden wird beispielhaft auf WO 2009/011157, US 6 558 844, US 6 183 718 oder EP 816 292 verwiesen. Diese beschreiben den Einsatz von stabilisierten Lithium-Mangan-Oxiden in Spinellstruktur als alleiniges Aktivmaterial für kathodische Elektroden in Lithium-Ionen-Batterien. Besonders bevorzugte Stabilisierungsmethoden umfassen Dotierung sowie Beschichtung.

Bezüglich der Art und Weise, wie vorliegend die Aktivmaterialien (beispielsweise Lithium-Polyanion-Verbindung, NMC und LMO) gemischt werden, bestehen keinerlei Beschränkungen. Bevorzugt sind physikalische Mischungen (z.B. durch Vermengen von Pulvern oder Partikeln, insbesondere unter Energieeintrag) oder chemische Mischungen (z.B. durch gemeinsame Abscheidung aus der Gasphase oder einer wässrigen Phase, beispielsweise Dispersion), wobei bevorzugt ist, dass die Aktivmaterialien als Ergebnis des Mischvorganges in einer homogenen Vermischung vorliegen, also die Komponenten ohne physikalische Hilfsmittel nicht mehr als getrennte Phasen wahrnehmbar sind.

### Auftragen/Aufbringen der aktiven Masse auf die Träger

Das Aktivmaterial wird im Sinne der vorliegenden Erfindung auf einen Träger "aufgebracht". Bezüglich dieses **"Aufbringens"** des Aktivmaterials auf den Träger bestehen keinerlei Beschränkungen. Das Aktivmaterial kann als Paste oder als Pulver aufgebracht, oder aus der Gasphase oder einer flüssigen Phase, beispielsweise als Dispersion, abgeschieden werden.

Bevorzugt ist dabei ein Extrusionsverfahren. Vorzugsweise wird die das Aktivmaterial als Paste oder Dispersion direkt auf die kathodische Elektrode aufgetragen. Durch Coextrusion mit den anderen Bestandteilen der elektrochemischen Zelle, insbesondere anodische Elektrode und Separator, entsteht dann ein gelegter oder ein Laminatverbund (siehe Diskussion zu Extrudaten und Laminaten unten). Die Begriffe "Paste" und "Dispersion" werden vorliegend synonym verwendet.

Ein "gelegter" Elektrodenstapel wird dabei nicht dauerhaft verklebt sondern die Schichten (Kathode-Separator-Anode- etc.) werden lediglich aufeinandergelegt und gegebenenfalls verpresst. In einem "Laminat" wird zusätzlich ein Adhesiv und/oder eine Wärmebehandlung durchgeführt, so dass der Stapel dauerhaft laminiert ("verklebt") und somit unabhängig von einem möglichen Verpressen (beispielsweise erreicht durch Anlegen eines Vakuums an eine vakuumdichte Umhüllung um den Elektrodenstapel) zusammengehalten wird.

Im Rahmen der vorliegenden Erfindung ist es auch möglich, dass die Elektroden und der Separator gewickelt werden, vorzugsweise in einem Flachwickel.

Bevorzugt wird das Aktivmaterial nicht als solches auf den Träger aufgebracht, sondern gemeinsam mit anderen, nicht-aktiven (d.h. nicht Lithium einlagernden) weiteren Bestandteilen.

Dabei ist bevorzugt, dass neben dem zumindest einen Aktivmaterial zumindest ein **Bindemittel** oder Bindersystem vorliegt, also Bestandteil der kathodischen Elektrode (ohne Träger) ist. Dieses Bindemittel kann SBR, PVDF, ein PVDF-Homo- oder -Copolymer (wie beispielsweise Kynar 2801 oder Kynar 761) sein oder umfassen.

Optional umfasst die kathodische Elektrode einen **Stabilisator**, beispielsweise Aerosil oder Sipernat. Bevorzugt ist es, wenn diese Stabilisatoren in einem Gewichtsverhältnis von bis zu 5 Gewichtsprozent, vorzugsweise bis zu 3 Gewichtsprozent, jeweils bezogen auf das Gesamtgewicht der auf den Träger aufgebrachten Masse der kathodischen Elektrode, vorliegen.

Insbesondere ist es bevorzugt, dass die aktive Masse für die kathodische und/oder die anodische Elektrode den unten beschriebenen Separator, also einen Separator umfassend zumindest einen porösen keramischen Werkstoff, insbesondere das unten beschriebene "Separion", als pulverförmige Beimischung enthält, vorzugsweise in einem Gewichtsverhältnis von 1 Gewichtsprozent bis 5 Gewichtsprozent, weiter vorzugsweise 1 Gewichtsprozent bis 2,5 Gewichtsprozent, jeweils bezogen auf das Gesamtgewicht der auf den Träger aufgebrachten Masse der kathodischen Elektrode. Insbesondere im Hinblick auf eine elektrochemische Zelle mit einer SeparatorSchicht umfassend zumindest einen porösen keramischen Werkstoff, wie unten beschreiben, führt dies zu besonders stabilen und sicheren Zellen.

Weiterhin ist bevorzugt, dass neben dem zumindest einen Aktivmaterial (sowie gegebenenfalls zusätzlich zu dem zumindest einen Bindemittel oder Bindersystem und/oder dem zumindest einen Stabilisator) zumindest ein **Leitfähigkeitszusatz** vorliegt, also Bestandteil der kathodischen Elektrode (ohne Träger) ist. Solche Leitfähigkeitszusätze umfassen beispielsweise Leitruß (Enasco) oder Graphit (KS 6), vorzugsweise in einem Gewichtsverhältnis von 1 Gewichtsprozent bis 6 Gewichtsprozent, weiter vorzugsweise 1 Gewichtsprozent bis 3 Gewichtsprozent, jeweils bezogen auf das Gesamtgewicht der auf den Träger aufgebrachten Masse der kathodischen Elektrode. Dabei können auch Strukturmaterialien, insbesondere Strukturmaterialien im Nanometer-Bereich oder leitfähige Kohlenstoff-"nanotubes" eingebracht werden, beispielsweise Bayer "Baytubes^{®}".

Die vorstehend definierten Aktivmaterialien für die Elektroden, insbesondere für die kathodische Elektrode, liegen auf einem Träger vor. Im Rahmen der vorliegenden Erfindung bestehen bezüglich des Trägers oder des Trägermaterials keine Einschränkungen, außer dass dieser beziehungsweise dieses geeignet sein muss, das zumindest eine Aktivmaterial, insbesondere das zumindest eine Aktivmaterial der kathodischen Elektrode, aufzunehmen sowie dass der Träger eine Dicke von 5 µm bis 100 µm, vorzugsweise 10 µm bis 75 µm, weiter vorzugsweise 15 µm bis 45 µm, also vergleichsweise dünn bemessen sein muss. Der Träger ist dabei vorzugsweise als Kollektorfolie ausgebildet.

Weiterhin soll besagter Träger während des Betriebes der Zelle bzw. Batterie, also insbesondere im Entlade- und Ladebetrieb, gegenüber dem Aktivmaterial im Wesentlichen beziehungsweise weitestgehend inert sein. Der Träger kann homogen sein, oder eine Schichtenstruktur (Schichtenverbund) umfassen oder ein Verbundmaterial sein oder umfassen.

Der Träger trägt vorzugsweise auch zur Ab- bzw. Zuleitung von Elektronen bei. Das Trägermaterial ist demzufolge vorzugsweise zumindest teilweise elektrisch leitfähig, bevorzugt elektrisch leitfähig. Das Trägermaterial umfasst in dieser Ausführungsform vorzugsweise Aluminium oder Kupfer oder besteht aus Aluminium oder Kupfer. Der Träger ist dabei vorzugsweise mit zumindest einem elektrischen Ableiter verbunden.

Im Sinne der vorliegenden Erfindung dient der Träger vorzugsweise auch zur Wärmeabfuhr aus dem Inneren der Zelle.

Der Träger kann beschichtet oder nicht beschichtet sein und kann ein Verbundmaterial sein.

Der Begriff **"anodische Elektrode"** bedeutet die Elektrode, die beim Anschluss an einen Verbraucher ("Entladen"), also beispielsweise einen Elektromotor, Elektronen abgibt. Die anodische Elektrode ist demzufolge in diesem Fall die "negative Elektrode", in welche die Ionen beim Laden eingelagert werden.

Bezüglich der anodischen Elektrode bestehen vorliegend prinzipiell keine Einschränkungen, außer dass diese das Ein- und Auslagern von Li-Ionen prinzipiell ermöglichen muss. Die anodische Elektrode umfasst vorzugsweise Kohlenstoff und/oder Lithiumtitanat, weiter vorzugsweise beschichteten Graphit oder besteht aus Li-Metall.

In einer besonders bevorzugten Ausführungsform wird in der elektrochemischen Zelle eine anodische Elektrode eingesetzt, die beschichteten Graphit umfasst. Dabei ist es besonders bevorzugt, dass die anodische Elektrode konventionellen Graphit oder sogenannten "weichen" Kohlenstoff ("soft carbon") umfasst, welcher mit härterem Kohlenstoff, insbesondere mit "hard carbon", beschichtet ist. Dabei hat der härtere Kohlenstoff / hard carbon eine Härte von ≥ 1.000 N/mm², vorzugsweise von ≥ 5.000 N/mm².

Der "konventionelle" Graphit kann Naturgraphit wie UFG8 von Kropfmühl sein oder kann einen C-Faseranteil oder Carbon Nano Tubes (CNT) von bis zu 38 % oder CNT anteilig aufweisen.

Bevorzugt ist dann der Anteil "hard carbon" relativ zu "hard carbon" + "soft carbon" maximal 15 %.

Eine anodische Elektrode umfassend konventionellen Graphit ("soft carbon", Naturgraphit), welcher mit "hard carbon" beschichtet ist, erhöht im Zusammenwirken mit der erfindungsgemäßen kathodischen Elektrode die Stabilität der elektrochemischen Zelle in besonderem Maße.

Vorzugsweise liegen die Elektroden, wie auch der Separator, in Schichten als **Folien oder Lagen** vor. Dies bedeutet, dass die Elektroden wie auch der Separator in Form einer Schicht oder in Form von Schichten aus den entsprechenden Materialien oder Substanzen aufgebaut sind. In der elektrochemische Zelle können diese Schichten oder Lagen übereinander gelegt, laminiert oder gewickelt werden.

Im Sinne der vorliegenden Erfindung ist es bevorzugt, wenn die Schichten oder Lagen übereinander gelegt werden, ohne diese zu laminieren.

In den vorliegenden elektrochemische Zellen beziehungsweise Batterien sollen die darin verwendeten **Separatoren**, die eine kathodische Elektrode von einer anodischen Elektrode trennen, so ausgestaltet sein, dass sie einen leichten Durchtritt von Ladungsträgern ermöglichen.

Der Separator ist ionenleitend und weist vorzugsweise eine poröse Struktur auf. Im Falle der vorliegenden elektrochemischen Zelle, die mit Lithium-Ionen arbeitet, erlaubt der Separator den Durchtritt von Lithium-Ionen durch den Separator.

Bevorzugt ist, dass der Separator zumindest ein anorganisches Material, bevorzugt zumindest einen keramischen Werkstoff, umfasst. Dabei ist bevorzugt, dass der Separator zumindest einen porösen keramischen Werkstoff umfasst, vorzugsweise in einer auf einem organischen Trägermaterial aufgebrachten Schicht.

Ein Separator diesen Typs ist prinzipiell aus der WO 99/62620 bekannt bzw. kann nach den dort offenbarten Methoden hergestellt werden. Ein derartiger Separator ist unter dem Handelsnamen Separion^{®} der Firma *Evonik* kommerziell erhältlich.

Vorzugsweise ist der **keramische Werkstoff** für den Separator ausgewählt aus der Gruppe der Oxide, Phosphate, Sulfate, Titanate, Silikate, Aluminosilikate, Borate zumindest eines Metall-ions.

Weiter vorzugsweise werden hierbei Oxide des Magnesiums, Calciums, Aluminiums, Siliziums, Zirkons und Titans eingesetzt, sowie Silikate (insbesondere Zeolithe), Borate und Phosphate. Derartige Substanzen für Separatoren sowie Verfahren zur Herstellung der Separatoren werden in EP 1 783 852 offenbart.

Dieser keramische Werkstoff weist eine für die Funktion der elektrochemische Zelle ausreichende Porosität auf, ist jedoch im Vergleich zu konventionellen Separatoren, die keinen keramischen Werkstoff umfassen, wesentlich temperaturbeständiger und schrumpft bei höheren Temperaturen weniger. Ein keramischer Separator weist zudem vorteilhaft eine hohe mechanische Festigkeit auf.

Insbesondere im Zusammenspiel mit dem erfindungsgemäßen Aktivmaterial für die kathodische Elektrode, welches eine erhöhte thermische Stabilität und Alterungsbeständigkeit bedingt, kann der keramische Separator in seiner Schichtdicke so verringert werden, dass bei überlegener Sicherheit und mechanischer Festigkeit die Zellgröße verringert und die Energiedichte erhöht werden kann. Dies erlaubt es unter anderem, die erfindungsgemäß angestrebten geringen Dicken der Träger/Elektroden zu erreichen, ohne die Sicherheit der Zelle zu beeinträchtigen.

In der elektrochemischen Zelle der vorliegenden Erfindung sind für den **Separator Dicken** von 2 µm bis 50 µm bevorzugt, insbesondere 5 µm bis 25 µm, weiter bevorzugt 10 µm bis 20 µm. Die erhöhte thermische Stabilität und Alterungsbeständigkeit der kathodischen Elektrode - wie oben ausgeführt - erlaubt es vorliegend, die Separatorschicht mit ihrem intrinsischen Widerstand im Vergleich zu den Separatoren des Standes der Technik dünner und somit von geringerer Zellimpedanz auszugestalten.

Weiter bevorzugt ist, dass die anorganische Substanz bzw. der keramische Werkstoff in Form von Partikeln mit einem größten Durchmesser von unter 100 nm vorliegt.

Die anorganische Substanz, vorzugsweise die keramischen Partikel, liegt/liegen dabei vorzugsweise auf einem organischen Trägermaterial vor.

Der Separator ist vorzugsweise mit Polyetherimid (PEI) beschichtet.

Erfindungsgemäß wird als **Trägermaterial für den Separator** ein organisches Material verwendet, welches als nicht verwebtes Vlies ausgestaltet ist, wobei das organische Material vorzugsweise ein Polyethylenglykolterephthalat (PET), ein Polyolefin (PO) oder ein Polyetherimid (PEI), oder Mischungen hiervon, umfasst. Das Trägermaterial ist vorteilhaft als Folie oder dünne Schicht ausgebildet. In einer besonders bevorzugten Ausführungsform ist oder umfasst besagtes organisches Material ein Polyethylenglykolterephthalat (PET).

In einer bevorzugten Ausführungsform ist dieser Separator, der vorzugsweise als Verbund von zumindest einem organischen Trägermaterial mit zumindest einer anorganischen (keramischen) Substanz vorliegt, als schichtförmiger Verbund in Folienform ausgebildet, der vorzugsweise einseitig oder beidseitig mit einem Polyetherimid beschichtet ist.

In einer bevorzugten Ausführungsform eines Separators besteht der Separator aus einer Schicht von Magnesiumoxid, die weiter vorzugsweise ein- oder beidseitig mit Polyetherimid beschichtet ist.

In einer weiteren Ausführungsform können 50 bis 80 Gewichtsprozent des Magnesiumoxids durch Calciumoxid, Bariumoxid, Bariumcarbonat, Lithium-, Natrium-, Kalium-, Magnesium-, Calcium-, Bariumphosphat oder durch Lithium-, Natrium-, Kaliumborat, oder Mischungen dieser Verbindungen, ersetzt sein.

Das Polyetherimid, mit dem die anorganische Substanz in der bevorzugten Ausführungsform einseitig oder beidseitig beschichtet ist, liegt vorzugsweise in Form des oben beschriebenen (nicht-verwebten) Faservlieses im Separator vor. Der Begriff "Faservlies" bedeutet hierbei, dass die Fasern in nicht gewebter Form vorliegen (non-woven fabric). Derartige Vliese sind aus dem Stand der Technik bekannt und/oder können nach den bekannten Verfahren hergestellt werden, beispielsweise durch ein Spinnvliesverfahren oder ein Schmelzblasverfahren wie in DE 195 01 271 A1 referiert.

Polyetherimide sind bekannte Polymere und/oder können nach bekannten Verfahren hergestellt werden. Beispielsweise werden derartige Verfahren in der EP 0 926 201 offenbart. Polyetherimide sind beispielsweise unter dem Handelsnamen Ultem^{®} kommerziell erhältlich. Besagtes Polyetherimid kann erfindungsgemäß im Separator in einer Schicht oder in mehreren Schichten vorliegen, jeweils einseitig und/oder beidseitig auf der Schicht des anorganischen Materials.

In einer bevorzugten Ausführungsform umfasst das Polyetherimid ein weiteres Polymer. Dieses zumindest eine weitere Polymer wird vorzugsweise ausgewählt aus der Gruppe bestehend aus Polyester, Polyolefin, Polyacrylnitril, Polycarbonat, Polysulfon, Polyethersulfon, Polyvinylidenfluorid, Polystyrol.

Vorzugsweise ist das weitere Polymer ein Polyolefin. Bevorzugte Polyolefine sind Polyethylen und Polypropylen.

Das Polyetherimid, vorzugsweise in Form des Faservlieses, ist dabei vorzugsweise mit einer oder mehreren Schichten des weiteren Polymers, vorzugsweise des Polyolefins, das vorzugsweise gleichfalls als Faservlies vorliegt, beschichtet.

Die Beschichtung des Polyetherimids mit dem weiteren Polymeren, vorzugsweise des Polyolefins, kann durch Verklebung, Laminierung, durch eine chemische Reaktion, durch Verschweißung oder durch eine mechanische Verbindung erzielt werden. Derartige Polymerverbunde sowie Verfahren zu ihrer Herstellung sind aus der EP 1 852 926 bekannt.

Vorzugsweise werden die Vliese aus Nanofasern oder aus technischen Gläsern der verwendeten Polymeren gefertigt, wodurch Vliese gebildet werden, die eine hohe Porosität unter Ausbildung geringer Porendurchmesser aufweisen.

Vorzugsweise sind die Faserdurchmesser des Polyletherimid-Vlieses größer als die Faserdurchmesser des weiteren Polymer-Vlieses, vorzugsweise des Polyolefin-Vlieses.

Vorzugsweise weist das aus Polyetherimid gefertigte Faservlies dann einen höheren Porendurchmesser auf als das Faservlies, das aus den weiteren Polymeren gefertigt ist.

Die Verwendung eines Polyolefins zusätzlich zum Polyetherimid gewährleistet eine erhöhte Sicherheit der elektrochemischen Zelle, da bei unerwünschter oder zu starker Erwärmung der Zelle sich die Poren des Polyolefins zusammenziehen und der Ladungstransport durch den Separator hindurch reduziert bzw. beendet wird. Sollte sich die Temperatur der elektrochemischen Zelle soweit erhöhen, dass das Polyolefin zu schmelzen beginnt, wirkt das gegen Temperatureinwirkung sehr stabile Polyetherimid dem Zusammenschmelzen des Separators und damit einer unkontrollierten Zerstörung der elektrochemischen Zelle wirksam entgegen.

Vorteilhaft ist der keramische Separator aus einem biegsamen keramischen Kompositmaterial gebildet. Ein Kompositmaterial (Verbundmaterial) ist aus verschiedenen, miteinander fest verbundenen Materialien hergestellt. Ein solches Material kann auch als Verbundmaterial bezeichnet werden. Insbesondere ist vorgesehen, dass dieses Kompositmaterial aus keramischen Materialien und aus polymeren Materialien gebildet ist. Es ist bekannt, ein Vlies aus PET mit einer keramischen Imprägnierung bzw. Auflage zu versehen. Solche Kompositmaterialien können Temperaturen von über 200°C (teilweise bis 700°C) standhalten.

Vorteilhaft erstreckt sich eine Separatorschicht bzw. ein Separator wenigstens bereichsweise über eine Begrenzungskante wenigstens einer insbesondere benachbarten Elektrode. Besonders bevorzugt erstreckt sich eine Separatorschicht bzw. ein Separator über sämtliche Begrenzungskanten insbesondere benachbarter Elektroden hinaus. So werden auch elektrische Ströme zwischen den Kanten von Elektroden eines Elektrodenstapels verringert beziehungsweise verhindert.

Zur **Herstellung der elektrochemischen Zelle** der Erfindung können Verfahren verwendet werden, die prinzipiell bekannt sind, etwa beispielsweise die Verfahren, die beschrieben sind in *"*Handbook of Batteries", Third Edition, McGraw-Hill, Editors: D. Linden, T. B. Reddy, 35.7.1.

In einer Ausführungsform wird die Separatorschicht direkt auf der negativen oder der positiven Elektrode oder der negativen und der positiven Elektrode ausgebildet.

Vorzugsweise wird die anorganische Substanz des Separators als Paste oder Dispersion direkt auf die negative Elektrode und/oder die positive Elektrode aufgetragen. Durch Coextrusion entsteht dann ein Laminatverbund. Für die vorliegende Erfindung wird dabei eine Pastenextrusion besonders bevorzugt.

Der Laminatverbund umfasst dann eine Elektrode und den Separator bzw. die beiden Elektroden und den dazwischen liegenden Separator.

Nach der Extrusion kann der entstandene Verbund nach den üblichen Verfahren getrocknet bzw. gesintert werden, falls erforderlich.

Es ist auch möglich, die anodische Elektrode und die kathodische Elektrode sowie die Schicht der anorganischen Substanz, also den Separator, getrennt voneinander herzustellen. Die anorganische Substanz beziehungsweise der keramische Werkstoff liegt/liegen dann vorzugsweise in Form einer Folie vor. Die getrennt voneinander hergestellten Elektroden und der Separator werden dann kontinuierlich und getrennt einer Prozessoreinheit zugeführt, wobei die zusammengeführte negative Elektrode mit dem Separator und der positiven Elektrode zu einem Zellenverbund gelegt (bevorzugt) oder laminiert oder gewickelt werden. Die Prozessoreinheit umfasst oder besteht vorzugsweise aus Kaschierwalzen. Ein derartiges Verfahren ist aus der WO 01/82403 bekannt.

### Beispiele

In einer bevorzugten Ausführungsform liegen die auf den Träger aufzubringenden Aktivmaterialien als homogene Pulver oder Pasten oder Dispersionen vor. In einer bevorzugten Ausführungsform wird das Gemisch im Wege der Pastenextrusion, optional ohne vorhergehende Misch- und Trocknungsphase, kontinuierlich hergestellt und aufgezogen sowie zur Elektrode verdichtet.

Bei der Extrusion kann als Fliesshilfsmittel einer der Bestandteile des Elektrolyten benutzt werden, aber auch ein Gemisch, beispielsweise Ethylcarbonat (EC) / Ethylmethylcarbonat (EMC) in einem Verhältnis um 3 : 1 (+/- 20%). Bevorzugt ist dabei die Verarbeitung in Knetern, die inert und vorzugsweise wasserfrei geführt oder beaufschlagt werden.

Erfindungsgemäß vorteilhaft ist die Herstellung der beschichteten Elektroden oder des Zelllaminats durch Pastenextrusion. In einen Pastenextruder (beispielsweise "Common Tec"), der vorzugsweise nach dem Prinzip der Kolbenstrangpresse arbeitet, werden die Aktivmaterialien eindosiert, eingesetzt und dann durch eine Düse ausgepresst. Das noch Gleitmittel enthaltende Extrudat wird in einer Trockenzone von Gleitmittel befreit und anschließend gesintert und/oder kalandriert. Hierdurch wird erreicht, dass der Abrieb minimiert wird, was zu einer erhöhten Lebensdauer der Aggregate und der Zellen beiträgt. Es wird Energie eingespart, da bei Raumtemperatur extrudiert werden kann und eine aufwändige, kontrolliert homogene Beheizung entfällt. Auch die Geruchsbelastung durch Weichmacherdämpfe am Extruder wird minimiert.

Bevorzugt werden im Schritt der Pastenextrusion per Mikroinjektion weitere Stoffe wie Radikalfänger oder ionische Flüssigkeiten einextrudiert, die eine verlängerte Lebensdauer der Zellen bewirken, beispielsweise durch Injektion über eine Fläche/Masse extrudierter Bestandteile in Höhe der beschriebenen Zuschlagsstoffe oder Stabilisatoren, bzw. von Additiven wie Vinylencarbonat oder Brandhemmern, wie "firesorb", oder auch Nanometer-Strukturmaterial in Mikrokapseln, deren Einkapselung aus polymeren Stoffen bestehen kann, die insbesondere nur bei überhöhter Temperatur heraus diffundieren und die Elektrode benetzen oder ionisch abdichten. Hierdurch werden Mikrokurzschlüsse und/oder lokale "hot spots" innerhalb der Zellen verhindert und die Sicherheit der Zelle insgesamt weiter erhöht.

In einem weiteren erfindungsgemäßen Ansatz mit dem Ziel, eine Zelle für den "10C"-Lade- und "20C"-Entladebetrieb zu schaffen, wurden Bänder für das Trägermaterial in Kupfer oder Aluminium von 30 bzw. 20 µm ausgewählt, die gleichzeitig die Zelle und das Elektrodenmaterial besser kühlen, welche dadurch entsprechend stromtragfähig sind. Auf die Träger/Substrate werden bevorzugt Elektroden im Dickenbereich Kathode 50 µm bis 125 µm und Anode 10 µm bis 80 µm nach Kalandrieren hergestellt. Die Elektroden im oberen Bereich der genannten Dicken werden zu "high energy"-Zellen verbaut, umgekehrt die dünnen Elektroden zu "high power"-Zellen.

Injiziert werden die o.a. Stabilisatoren und Leitfähigkeitszusätze bevorzugt nach Rezepturanteil von je 3 % maximal.

Bezüglich der Mischungen ist es bevorzugt, dass die Aktivmaterialien und dabei insbesondere das Lithium-Nickel-Mangan-Kobalt-Mischoxid und das Lithium-Mangan-Oxid jeweils in Partikelform vorliegen, vorzugsweise als Partikel mit einem mittleren Durchmesser von 1 µm bis 50 µm, bevorzugt 2 µm bis 40 µm, weiter bevorzugt 4 µm bis 20 µm. Dabei können die Partikel auch Sekundärpartikel sein, die aus Primärpartikeln aufgebaut sind. Die oben genannten mittleren Durchmesser beziehen sich dann auf die Sekundärpartikel.

Eine homogene und innige Vermischung der Phasen, insbesondere der Phasen in Partikelform, trägt dazu bei, dass die Alterungsbeständigkeit des Lithium-Nickel-Mangan-Kobalt-Mischoxids in dieser Mischung besonders vorteilhaft beeinflusst wird.

Andere Arten der "Mischung", beispielsweise das alternierende Aufbringen von Schichten auf einem Träger oder die Beschichtung von Partikeln, sind auch möglich.

Im Folgenden ist die Herstellung einer erfindungsgemäßen elektrochemischen Zelle, umfassend die beiden Elektroden, insbesondere hier die kathodische Elektrode und den Separator in einem Elektrolyten mit gasdichter Umhausung, beschreiben.
a) Aus Dimethylformamid werden elektrostatisch Polyetherimid-Fasern mit einem mittleren Faserdurchmesser von ca. 2 µm gesponnen und diese zu einem Faservlies verarbeitet, das eine Dicke von ca. 15 µm aufweist.
b) 25 Gew.-Teile LiPF₆ und 20 Gew.-Teile Ethylencarbonat, 10 Gew.-Teile Propylencarbonat oder EMC, 25 Gew.-Teile Magnesiumoxid und 5 g Kynar 2801^{®}, ein Bindemittel, werden miteinander vermischt und in einem Disperser solange dispergiert, bis eine homogene Dispersion entstanden ist.
c) Eine unter b) hergestellte Dispersion wird auf das unter a) hergestellte Vlies aufgetragen, so dass die aufgetragene Schicht ungefähr eine Stärke von 20 µm aufweist (**Separator**).
d) Auf eine Kupfer Folie der Stärke 18 µm wird mittels eines Extruders eine Masse eines Gemischs aus 75 Gew.-Teilen MCMB 25/28^{®} (Mesocarbonmicrobeads (Osaka Gas Chemicals), 10 Gew.-Teilen Lithiumoxalatoborat, 8 Gew.-Teilen Kynar 2801^{®} und 7 Gew.-Teilen Propylencarbonat aufgetragen, wobei eine Schichtstärke der aufgetragenen Schicht von ca. 20 bis 40 µm resultiert (anodische Elektrode).
e) Auf eine Aluminium-Folie der Stärke 18 µm wird eine Paste eines Gemischs aus 50 Gew.-Teilen Lithium-Nickel-Mangan-Kobalt-Mischoxid (NMC) in Schichtstruktur, 30 Gew.-Teilen Lithium-Mangan-Oxid (LMO) in Spinellstruktur, 10 Gew.-Teilen Kynar 2801^{®} und 10 Gew.-Teilen Propylencarbonat aufgetragen (**kathodische Elektrode**).
f) Die nach c), d) und e) hergestellten Lagen werden auf eine Wickelmaschine gewickelt, so dass das Produkt nach c) zwischen die Beschichtungen der Produkte nach d) und e) zu liegen kommt, wobei das Polyetherimid-Vlies die Beschichtung des Produkts nach Beispiel e) kontaktiert. Die Metallfolien (Kollektorfolien) werden verbunden und mit Ableitern versehen und das System in eine Schrumpffolie eingehaust.

Die Einhausung umfasst keinerlei Vorrichtung zum Abbau von einem (hypothetischen) Überdruck in der Einhausung.

Die **Anode** ist im Rahmen der vorliegenden Beispile vorteilhaft ein Graphitsystem aus einem "soft carbon" beschichtet mit einem "hard carbon", wobei "hard carbon" nur bis zu 15 % vorliegt.

Die Kathode ist ausgelegt für großformatige Stapelzellen, d.h. insbesondere als oder in Pattern-Form beschichtet. Die daraus entstanden Zellen zeigen auch in der "high energy"-Ausführung eine hohe Belastbarkeit dauerhaft bis 10C, sind alterungsresistent und verfügen über hervorragende Zykleneigenschaften > 5.000 Vollzyklen (80 %). Manipulierter Eintrag einer Kupferfluse oder eines Spans wurden durch die Polymere, die eininjiziert wurden, umhüllt und konnten so keinen sektoralen "hot spot" ausbilden. Die "high-power"-Ausführung ist äußerst zyklenstabil und belastbar, über > 20C hinaus.

Bezüglich des Elektrolyten konnte gezeigt werden, dass es vorteilhaft ist, einfache Mischungen wie EC/EMC 1 : 3 sowie einige Gewichtsprozent an partikelförmigem porösem keramischen Separatormaterial (ohne weitere, z.T. umweltschädlich wirkende, bedenkliche Additive) einzusetzen.

## Patentansprüche

1. Elektrochemische Zelle für eine Lithiumionenbatterie umfassend zumindest:
• einen Elektrolyten und
• zumindest eine kathodischen Elektrode und
• zumindest eine anodischen Elektrode sowie
• zumindest einen zwischen - oder auf der - kathodischer (n) Elektrode und/oder anodischer (n) Elektrode angeordneten Separator, wobei der besagte Separator zumindest einen porösen keramischen Werkstoff umfasst, welcher in einer auf einem organischen Trägermaterial aufgebrachten Schicht vorliegt, wobei dieses organische Trägermaterial ein nicht-verwebtes Polymer umfasst oder ist, wobei
Elektrolyt, Elektroden und Separator(en) in einer druckfesten Umhausung gasdicht eingschlossen sind, und wobei besagte Umhausung sowie besagte elektrochemische Zelle keine Mittel zum Druckabbau in der Umhausung umfassen, insbesondere keine Bersteinrichtung, Druckventil, Einwegventil, Zentralpin, Dorn oder dergleichen,
wobei die Dicke der kathodischen Elektrode sowie die Dicke der anodischen Elektrode jeweils geringer ist als 300 µm, vorzugsweise geringer als 200 µm, weiter vorzugsweise geringer als 150 µm, sowie weiter vorzugsweise geringer als 100 µm, und schließlich geringer als 50 µm, wobei die "Dicke" der kathodischen Elektrode, sowie der anodischen Elektrode die Summe aus der Dicke des Trägers und des Aktivmaterials ist.

2. Elektrochemische Zelle nach Anspruch 1, **dadurch gekennzeichnet, dass** die Umhausung in Form einer Verbundfolie, insbesondere einer Laminatfolie, ausgebildet ist, insbesondere als "pouch cell" oder "tea bag", oder als Rahmenzelle mit Rahmen und Hüllblechen oder als abgedichteter Verbund von Schalenstücken, oder als jede beliebige Kombination hiervon.

3. Elektrochemische Zelle nach einem der vorstehenden Ansprüche, **dadurch gekennzeichnet, dass** der Träger für die kathodische Elektrode ein metallisches Material umfasst, insbesondere Aluminium, und dass besagter Träger eine Dicke von 5 µm bis 100 µm, vorzugsweise 10 µm bis 75 µm, weiter vorzugsweise 15 µm bis 45 µm aufweist, und/oder dass der Träger für die anodische Elektrode ein metallisches Material umfasst, insbesondere Kupfer, und dass besagter Träger eine Dicke von 5 µm bis 100 µm, vorzugsweise 10 µm bis 75 µm, weiter vorzugsweise 15 µm bis 45 µm aufweist.

4. Elektrochemische Zelle nach einem der vorstehenden Ansprüche, **dadurch gekennzeichnet, dass** der Separator/die Separatoren eine Dicke von 2 µm bis 50 µm, bevorzugt von 5 µm bis 25 µm aufweist/aufweisen.

5. Elektrochemische Zelle nach einem der vorstehenden Ansprüche, **dadurch gekennzeichnet, dass** der keramische Werkstoff ausgewählt ist aus der Gruppe der Oxide, Phosphate, Sulfate, Titanate, Silikate, Aluminosilikate oder Borate zumindest eines Metallions.

6. Verwendung der elektrochemischen Zelle nach einem der vorstehenden Ansprüche in Lithium-Ionen-Batterien zum Betrieb von Elektrowerkzeugen und zum Antrieb von Fahrzeugen, insbesondere vollständig oder überwiegend elektrisch angetriebenen Fahrzeugen oder von Fahrzeugen im sogenannten "Hybrid"-Betrieb, also gemeinsam mit einem Verbrennungsmotor, oder gemeinsam mit einer Brennstoffzelle, sowie in stationären Batterie-Anwendungen.

## Claims

1. Electrochemical cell for a lithium ion battery comprising at least:
• one electrolyte and
• at least one cathodic electrode and
• at least one anodic electrode as well as
• at least one separator disposed between - or on - the cathodic (n) electrode and/or anodic (n) electrode, wherein said separator comprises at least one porous ceramic material which is present as a layer applied to an organic substrate, wherein said organic substrate preferably comprises or is a non-woven polymer, wherein
the electrolyte, electrodes and separator(s) are enclosed in a pressure-resistant, gas-tight housing, and wherein said housing as well as said electrochemical cell does not comprise any means for reducing pressure in the housing, particularly no rupturing device, pressure valve, one-way valve, central pin, mandrel or the like,
wherein
the thickness of the cathodic electrode as well as the thickness of the anodic electrode are each less than 300 µm, preferably less than 200 µm, further preferred less than 150 µm, even further preferred less than 100 µm, wherein the "thickness" of the cathodic electrode, as well as the "thickness" of the anodic electrode is the sum of the thickness of the substrate and the thickness of the active material.

2. Electrochemical cell according to claim 1, **characterized in that** the housing is configured in the form of a composite film, particularly a laminated film, particularly as a "pouch cell" or "tea bag," or as a frame cell with frame and frame cladding or as a sealed assemblage of shell parts or as any combination thereof.

3. Electrochemical cell according to at least one of the preceding claims, **characterized in that** the substrate for the cathodic electrode comprises a metallic material, particularly aluminum, and said substrate has a thickness from 5 µm to 100 µm, preferably 10 µm to 75 µm, and further preferred from 15 µm to 45 µm, and/or that the substrate for the anodic electrode comprises a metallic material, particularly copper, and said substrate has a thickness from 5 µm to 100 µm, preferably 10 µm to 75 µm, and further preferred from 15 µm to 45 µm.

4. Electrochemical cell according to at least one of the preceding claims, **characterized in that** the separator(s) has/have a thickness of from 2 to 50 µm, preferably from 5 to 25 µm.

5. Electrochemical cell according to at least one of the preceding claims, **characterized in that** the ceramic material is selected from the group comprising oxides, phosphates, sulfates, titanates, silicates, aluminosilicates or borates of at least one metal ion.

6. Use of the electrochemical cell according to at least one of the preceding claims in lithium ion batteries to operate electric power tools or motor vehicle drive systems, particularly fully or predominantly electrically driven vehicles or vehicles of the so-called "hybrid" drive; i.e. operated together with an internal combustion engine or together with a fuel cell, or stationary battery applications.

## Revendications

1. Cellule électrochimique pour une pile au lithium, comprenant au moins :
- un électrolyte et
- au moins une électrode cathodique et
- au moins une électrode anodique et
- au moins un séparateur disposé entre ou sur l'électrode cathodique et/ou l'électrode anodique, dans laquelle ledit séparateur comprend au moins un matériau céramique poreux qui se présente en une couche appliquée sur un matériau de support organique, dans laquelle ce matériau de support organique comprend ou est un polymère non tissé, dans laquelle
l'électrolyte, les électrodes et le/les séparateur(s) sont renfermés de façon étanche aux gaz dans un boîtier résistant à la pression et dans laquelle ledit boîtier et ladite cellule électrochimique ne comprennent pas d'agent de réduction de la pression dans le boîtier, en particulier pas de dispositif de rupture, de clapet de réglage de la pression, de clapet unidirectionnel, de broche centrale, de mandrin ou similaire,
dans laquelle l'épaisseur de l'électrode cathodique et l'épaisseur de l'électrode anodique sont respectivement inférieures à 300 µm, de préférence inférieures à 200 µm, davantage préférée inférieures à 150 µm et de manière encore plus préférée inférieures à 100 µm et enfin inférieures à 50 µm, dans laquelle « l'épaisseur » de l'électrode cathodique et de l'électrode anodique est la somme des épaisseurs du support et du matériau actif.

2. Cellule électrochimique selon la revendication 1, **caractérisée en ce que** le boîtier est conçu sous la forme d'un film composite, en particulier d'un film stratifié, en particulier d'une « cellule de poche » ou d'un « sachet de thé » ou d'une cellule à cadre comportant un cadre et une tôle de revêtement ou d'une structure étanche de pièces d'enveloppe ou de toute combinaison de ceux-ci.

3. Cellule électrochimique selon l'une des revendications précédentes, **caractérisée en ce que** le support pour l'électrode cathodique comprend un matériau métallique, en particulier de l'aluminium, et **en ce que** ledit support présente une épaisseur de 5 µm à 100 µm, de préférence de 10 µm à 75 µm, de manière davantage préférée de 15 µm à 45 µm et/ou **en ce que** le support comprend pour l'électrode anodique un matériau métallique, en particulier du cuivre, et **en ce que** ledit support présente une épaisseur de 5 µm à 100 µm, de préférence de 10 µm à 75 µm, de manière davantage préférée de 15 µm à 45 µm.

4. Cellule électrochimique selon l'une des revendications précédentes, **caractérisée en ce que** le séparateur/les séparateurs présente(nt) une épaisseur de 2 µm à 50 µm, de préférence de 5 µm à 25 µm.

5. Cellule électrochimique selon l'une des revendications précédentes, **caractérisée en ce que** le matériau céramique est choisi dans le groupe des oxydes, phosphates, sulfates, titanates, silicates, aluminosilicates ou borates au moins d'un ion métallique.

6. Utilisation de la cellule électrochimique selon l'une des revendications précédentes dans des piles à ions lithium pour le fonctionnement d'un outil électrique et pour la propulsion de véhicules, en particulier de véhicules à propulsion entièrement ou principalement électrique ou de véhicules en mode « hybride », c'est-à-dire en association avec un moteur à exposition, ou en association avec une pile à combustible, et dans des utilisations de batterie stationnaire.
